# EUROPÄISCHE PATENTSCHRIFT

(11) **EP 2 499 723 B1**
(45) Veröffentlichungstag und Bekanntmachung des Hinweises auf die Patenterteilung: **16.01.2019**
(21) Anmeldenummer: 11701106.4
(22) Anmeldetag: 25.01.2011
(51) Int. Cl.: H02K 7/00, H02K 7/14

(54) **ANKER FÜR EIN ELEKTROHANDWERKZEUGGERÄT**
ARMATURE FOR AN ELECTRIC HAND TOOL APPLIANCE
INDUIT POUR OUTIL ÉLECTROPORTATIF

(30) Priorität: 30.01.2010 DE 102010006345
(43) Veröffentlichungstag der Anmeldung: 19.09.2012
(73) Patentinhaber: Metabowerke GmbH, 72622 Nürtingen (DE)
(72) Erfinder: FALTER, Norbert, 72622 Nuertingen (DE); SCHNELLE, Pattrick, 73728 Esslingen (DE); SCHMOHL, Michael, 72119 Ammerbuch (DE)
(74) Vertreter: Raunecker, Klaus Peter
(86) Internationale Anmeldenummer: PCT/EP2011/050968
(87) Internationale Veröffentlichungsnummer: WO 2011/092156

(56) Entgegenhaltungen:
- EP-A2- 1 353 433
- DE-A1- 1 513 791
- US-A- 3 413 498

## Beschreibung

Die Erfindung betrifft einen Anker für ein Elektrohandwerkzeuggerät mit einem Blechpaket, einem Kommutator und einer um eine Achse rotierbaren Ankerwelle, die getriebeseitig einen ein Ritzel umfassenden und mit einer Getriebekomponente zusammenwirkenden Antriebsabschnitt und einen Paketabschnitt aufweist, an dem zumindest das Blechpaket angeordnet ist. Sie betrifft ferner ein Elektrohandwerkzeuggerät mit einem einen solchen Anker aufweisenden Elektromotor.

Es ist bekannt, in der Motorenproduktion für Elektrohandwerkzeuggeräte eine Vielzahl von unterschiedlichen Ankern herzustellen und vorzuhalten, die die gleichen Wickeldaten und Paketlängen aufweisen, sich jedoch hinsichtlich der Gestaltung der Ritzel unterscheiden.

Die Elektrohandwerkzeuggeräte besitzen, abhängig von der jeweils konkreten Ausführungsform als Bohrmaschine, Stichsäge, Winkelschleifer oder dergleichen, unterschiedliche Getriebe, wodurch sich die den jeweiligen Elektrohandwerkzeuggeräten zugeordneten Anker in ihren Ritzeln voneinander unterscheiden.

Um die Vielzahl unterschiedlicher Anker voneinander unterscheiden zu können werden ihnen Losnummern zugeordnet, wobei Anker mit gleichen Ritzeln, gleiche Losnummern besitzen.

Bei den bekannten Ankern werden die Ritzel auf einer weichen Ankerwelle aufgebaut und anschließend einem Härte- und Richtprozess unterzogen.

Die Anker einer Losnummer werden entsprechend der benötigten Stückzahl der konkreten Ausführungsform des Elektrohandwerkzeuggeräts gefertigt und die fertigende Maschine danach auf die Produktion eines anderen, eine andere Losnummer aufweisenden Ankers umgestellt. Dies erweist sich als zeitaufwendig und kostenintensiv.

Um die Losgrößen im Zuge eines Fertigungsprozesses zu erhöhen, können Anker einer Losnummer unabhängig von der benötigten Stückzahl der konkreten Ausführungsform gefertigt werden und die überschüssigen Anker bevorratet werden, was Lagerraum erfordert und ebenfalls kostenintensiv ist. Stand der Technik ist EP 1 353 433 A2 und DE 1 513 791.

Aufgabe der Erfindung ist es, einen Anker vorzuschlagen, der die genannten Probleme reduziert.

Die Aufgabe wird durch einen im unabhängigen Anspruch 1 definierten erfindungsgemäßen Anker gelöst, bei dem der Antriebsabschnitt und der Paketabschnitt der Ankerwelle aus separaten Baulteilen gebildet sind, die unlösbar und drehfest miteinander verbunden sind. Hierdurch kann eine hohe Stückzahl an Ankerwellen mit hohen Losgrößen gefertigt werden, die in unterschiedlichen konkreten Ausführungsformen des Elektrohandwerkzeuggeräts verwendbar sind, indem jeweils ein spezifischer Antriebsabschnitt erst in der Montagephase des Elektromotors an den Paketabschnitt der Ankerwelle angefügt wird.

Ferner entfallen der Härte- und Richtprozess, da das Ritzel des Antriebsabschnitts nicht auf einer weichen Ankerwelle aufgebaut werden muss.

Weitere Ausgestaltungsformen der Erfindung sind in den abhängigen Ansprüchen 2 - 9 definiert.

Es erweist sich als vorteilhaft, dass der Antriebsabschnitt und der Paketabschnitt durch eine formschlüssige Verbindung unlösbar und drehfest miteinander verbunden sind. Hierdurch wird auf einfache Weise eine drehfeste Verbindung der beiden Abschnitte erreicht.

Die Erfindung sieht vor, dass der Paketabschnitt stirnseitig an seinem dem Antriebsabschnitt zugewandten Ende eine Ausnehmung, insbesondere ein Sackloch, aufweist, in die ein in axialer Richtung erstreckter Zapfen am dem Ritzel abgewandten Ende des Antriebsabschnitts einführbar ist. Zapfen und Ausnehmung sind komplementär zueinander ausgebildet. Da beide Abschnitte durch einen Formschluss miteinander verbunden werden erweist sich ein polygonaler Querschnitt von Zapfen und Ausnehmung als zweckmäßig. Antriebsabschnitt und Paketabschnitt werden beim Fügen zueinander zentriert.

In Weiterbildung letztgenannten Erfindungsgedankens erweist es sich von Vorteil, wenn zwischen der Ausnehmung am Paketabschnitt und dem Zapfen des Antriebsabschnitts ein in axialer Richtung erstreckter Spalt ausgebildet ist, der in radialer Richtung eine Breite von 0,03 mm bis 0,25 mm, bevorzugt 0,05 mm bis 0,2 mm, weiter bevorzugt 0,08 bis 0,15 mm, weiter bevorzugt 0,1 mm umfasst. Wenn die beiden Abschnitte beispielsweise durch eine Klebeverbindung aneinander festgelegt werden dient der Spalt als Klebespalt zum Aufnehmen bzw. Ablaufen von Klebstoff.

Erfindungsgemäss ist zusätzlich eine Verbindungshülse vorgesehen, die den Antriebsabschnitt und den Paketabschnitt aneinander festlegt und/oder eine Führung für den Antriebsabschnitt und den Paketabschnitt bildet.

Die Verbindungshülse kann durch ein zusätzliches Bauteil realisiert werden. Allerdings erweist es sich als vorteilhaft, wenn der Anker mindestens ein die Ankerwelle drehbar lagerndes Kugellager aufweist, welches die Verbindungshülse bildet. Dadurch wird auf ein ohnehin schon vorhandenes hochgenaues Bauteil zurückgegriffen und somit die Zahl der einzelnen Bauteile des Ankers nicht erhöht.

Darüber hinaus erweist es sich als vorteilhaft, wenn an dem Paketabschnitt der Ankerwelle zusätzlich der Kommutator und ein Lüfterrad angeordnet sind.

Vorzugsweise ist das Lüfterrad bezüglich des Blechpakets auf der dem Antriebsabschnitt zugewandten Seite des Paketabschnitts, und der Kommutator ist bezüglich des Blechpakets auf der dem Antriebsabschnitt abgewandten Seite des Paketabschnitts angeordnet.

Schließlich weist bei einer bevorzugten Ausführungsform der Erfindung der Paketabschnitt der Ankerwelle zumindest bereichsweise eine Kunststoffschicht auf, auf die das Blechpaket aufgepresst ist. Hierdurch wird eine elektrische Isolation zwischen Blechpaket und Paketabschnitt der Ankerwelle realisiert, und die drehfeste Verankerung des Blechpakets auf der Ankerwelle ist einfacher herstellbar.

Die Aufgabe wird darüber hinaus von einem Elektrohandwerkzeuggerät mit einem Anker gelöst, bei dem der Anker nach einem der Ansprüche 1 bis 8 ausgebildet ist.

Weitere Merkmale, Einzelheiten und Vorteile der Erfindung ergeben sich aus den beigefügten Patentansprüchen und der zeichnerischen Darstellung und nachfolgenden Beschreibung einer Ausführungsform der Erfindung. In der Zeichnung zeigen:
- Figur 1: eine Stirnansicht eines erfindungsgemäßen Ankers;
- Figur 2: eine Schnittansicht des Ankers gemäß Figur 1 entlang der Linie AA;
- Figur 3: eine perspektivische Ansicht eines Paketabschnitts des Ankers gemäß Figur 1;
- Figur 4: eine perspektivische Ansicht eines Antriebsabschnitts des Ankers gemäß Figur 1.

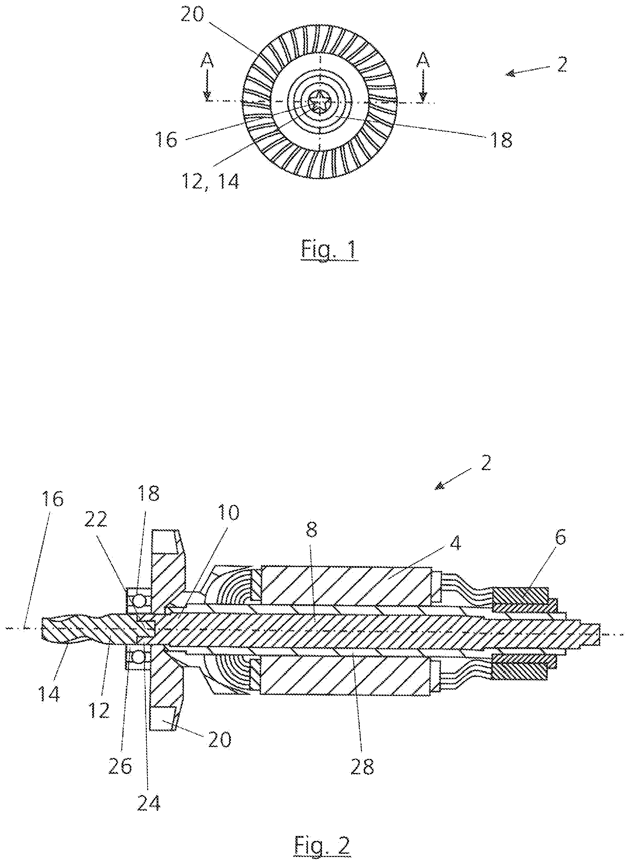

Die Figuren 1 und 2 zeigen einen insgesamt mit dem Bezugszeichen 2 versehenen Anker für ein Elektrohandwerkzeuggerät. Der Anker 2 umfasst ein Blechpaket 4 und einen Kommutator 6, die beide an einem Paketabschnitt 8 einer Ankerwelle 10 angeordnet, insbesondere aufgepresst, sind. Die Ankerwelle 10 umfasst ferner einen Antriebsabschnitt 12, der getriebeseitig ein Ritzel 14 besitzt und mit einer Getriebekomponente des Elektrohandwerkzeuggeräts (nicht dargestellt) in Antriebsverbindung gebracht wird.

Antriebsabschnitt 12 und Paketabschnitt 8 der Ankerwelle 10 sind aus separaten Bauteilen gebildet und unlösbar und drehfest miteinander verbunden.

Figur 1 zeigt eine Stirnsicht des Ankers 2. Vom Zentrum innen nach radial außen betrachtet dreht sich der Antriebsabschnitt 12 beim Betrieb des Handwerkzeuggeräts um eine Achse 16 der Ankerwelle 10. Die Ankerwelle 10 ist dabei zumindest durch ein Kugellager 18 drehbar gegenüber Komponenten des nicht dargestellten Elektrohandwerkzeuggeräts gelagert. Um den Anker 2 vor Überhitzung zu schützen ist am Paketabschnitt 8 der Ankerwelle 10 ein Lüfterrad 20 vorgesehen.

Figur 2 zeigt eine Schnittansicht entlang der Linie AA aus Figur 1. In der Bildebene links weist der Antriebsabschnitt 12 der Ankerwelle 10 das Ritzel 14 auf, um den Anker 2 mit einer Getriebekomponente des Elektrohandwerkzeuggeräts zu verbinden.

Auf der dem Ritzel 14 abgewandten Ende des Antriebsabschnitts 12 weist dieser einen Zapfen 22 mit beispielsweise, nicht Teil der beanspruchten Erfindung, rundem Querschnitt auf. Mit dem Zapfen 22 ist der Antriebsabschnitt 12 in eine Ausnehmung 24 in der Stirnseite des Paketabschnitts 8 der Ankerwelle 10 eingesteckt und bei dem beispielhaft gezeigten Ausführungsbeispiel durch eine Klebeverbindung darin festgelegt, wodurch Paketabschnitt 8 und Antriebsabschnitt 12 unlösbar und drehfest miteinander verbunden sind.

Auf Höhe des Zapfens 22 des Antriebsabschnitts 12 und der Ausnehmung 24 des Paketabschnitts 8 ist das Kugellager 18 angeordnet, das die Ankerwelle 10 drehbar lagert. Zudem bildet das Kugellager 18 eine Verbindungshülse 26, die Paketabschnitt 8 und Antriebsabschnitt 12 zusätzlich aneinander festlegt.

In der Bildebene rechts vom Kugellager 18 ist das Lüfterrad 20 am Paketabschnitt 8 der Ankerwelle 10 drehfest angeordnet. Beim Betrieb des Handwerkzeuggeräts dreht sich das Lüfterrad 20 mit der Ankerwelle 10 und kühlt mit dem hierdurch erzeugten Luftstrom den durchzugsbelüfteten Elektromotor.

Bei dem in Figur 2 gezeigtem Ausführungsbeispiel des Ankers 2 liegt das Lüfterrad 20 teilweise an der metallenen Oberfläche des Paketabschnitts 8 und teilweise an einer Kunststoffschicht 28 an, die den Paketabschnitt 8 der Ankerwelle 10 bereichsweise bedeckt.

In Bildebene weiter rechts schließt sich an das Lüfterrad 20 das Blechpaket 4 mit der Ankerwicklung an. Das Blechpaket 4 ist auf die Kunststoffschicht 28 des Paketabschnitts 8 der Ankerwelle 10 aufgepresst und dadurch drehfest mit der Ankerwelle 10 verbunden. Die Kunststoffschicht 28 isoliert zudem den Paketabschnitt 8 gegenüber dem Blechpaket 4. Um das Blechpaket herum ist im Elektrohandwerkzeuggerät ein Stator des Elektromotors angeordnet (nicht dargestellt).

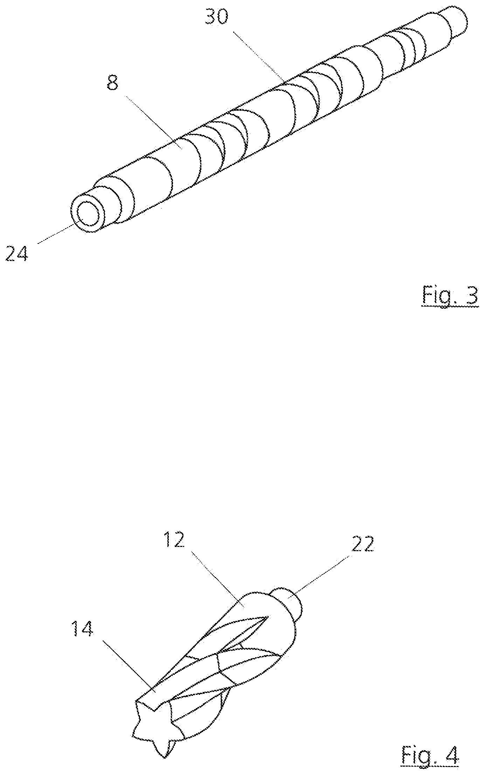

Figur 3 zeigt den Paketabschnitt 8 der Ankerwelle 10 ohne Kunststoffschicht 28. Auf der Mantelfläche des Paketabschnitts sind Rändel 30 eingebracht, die ein späteres Verbinden der Kunststoffschicht 28 mit dem Paketabschnitt 8 vereinfachen.

Auf der dem Antriebsabschnitt 12 zugewandten Stirnseite des Paketabschnitts 8 der Ankerwelle 10 ist die Ausnehmung 24 in den Paketabschnitt 8 eingebracht. Diese ist komplementär zum Zapfen 22 des Antriebabschnitts 12 der Ankerwelle 10 ausgebildet und weist als Beispiel, nicht Teil der beanspruchten Erfindung, einen runden Querschnitt auf.

Figur 4 zeigt den Antriebsabschnitt 12 der Ankerwelle 10, der am getriebeseitigen Ende das Ritzel 14 und an dem anderen Ende den Zapfen 22 aufweist.

## Patentansprüche

1. Anker (2) für ein Elektrohandwerkzeuggerät mit einem Blechpaket (4), einem Kommutator (6) und einer um eine Achse (16) rotierbaren Ankerwelle (10), die getriebeseitig einen ein Ritzel (14) umfassenden und mit einer Getriebekomponente zusammenwirkenden Antriebsabschnitt (12) und einen Paketabschnitt (8) aufweist, an dem zumindest das Blechpaket (4) angeordnet ist, wobei der Antriebsabschnitt (12) und der Paketabschnitt (8) der Ankerwelle (10) aus separaten Bauteilen gebildet sind, die unlösbar und drehfest miteinander verbunden sind, **dadurch gekennzeichnet, dass** zusätzlich eine Verbindungshülse (26) vorgesehen ist, die den Antriebsabschnitt (12) und den Paketabschnitt (8) aneinander festlegt und/oder eine Führung für den Antriebsabschnitt (12) und den Paketabschnitt (8) bildet, und wobei der Antriebsabschnitt (12) und der Paketabschnitt (9) durch eine formschlüssige Verbindung miteinander verbunden sind und der Paketabschnitt (8) stirnseitig an seinem dem Antriebsabschnitt (12) zugewandten Ende eine Ausnehmung (24) aufweist, in die ein in axialer Richtung erstreckter Zapfen (22) am Ritzel (14) abgewandten Ende des Antriebsabschnitts (12) eingreift, wobei die Ausnehmung (24) und der Zapfen (22) einen polygonalen Querschnitt aufweisen.

2. Anker (2) nach Anspruch 1, **dadurch gekennzeichnet, dass** der Antriebsabschnitt (12) und der Paketabschnitt (8) zusätzlich durch eine reibschlüssige Verbindung und/oder zusätzlich durch eine Klebeverbindung unlösbar und drehfest miteinander verbunden sind.

3. Anker (2) nach Anspruch 1 oder 2, **dadurch gekennzeichnet, dass** die Ausnehmung (24)als Sackloch ausgebildet ist.

4. Anker (2) nach einem oder mehreren der vorhergehenden Ansprüche, **dadurch gekennzeichnet, dass** zwischen der Ausnehmung (24) am Paketabschnitt (8) und dem Zapfen des Antriebsabschnitts (12) ein in axialer Richtung erstreckter Spalt ausgebildet ist, der in radialer Richtung eine Breite von 0,03 mm bis 0,25 mm, bevorzugt 0,05 mm bis 0,2 mm, weiter bevorzugt 0,08 bis 0,15 mm, weiter bevorzugt 0,1 mm umfasst.

5. Anker (2) nach Anspruch 1, **dadurch gekennzeichnet, dass** er ein die Ankerwelle (10) drehbar lagerndes Kugellager (18) aufweist, welches die Verbindungshülse (26) bildet.

6. Anker (2) nach einem oder mehreren der vorhergehenden Ansprüche, **dadurch gekennzeichnet, dass** an dem Paketabschnitt (8) der Ankerwelle (10) zusätzlich der Kommutator (6) und ein Lüfterrad (20) angeordnet sind.

7. Anker (2) nach Anspruch 6, **dadurch gekennzeichnet, dass** das Lüfterrad (20) bezüglich des Blechpakets (4) auf der dem Antriebsabschnitt (12) zugewandten Seite des Paketabschnitts (8) und der Kommutator (6) bezüglich des Blechpakets (4) auf der dem Antriebsabschnitt (12) abgewandten Seite des Paketabschnitts (8) angeordnet sind.

8. Anker (2) nach einem oder mehreren der vorhergehenden Ansprüche, **dadurch gekennzeichnet, dass** der Paketabschnitt (8) der Ankerwelle (10) zumindest bereichsweise eine Kunststoffschicht (28) aufweist, auf die das Blechpaket (4) aufgepresst ist.

9. Elektrohandwerkzeuggerät mit einem Anker (2), **dadurch gekennzeichnet, dass** er nach einem der Ansprüche 1 bis 8 ausgebildet ist.

## Claims

1. Armature (2) for an electric hand tool appliance, with a laminated core (4), a commutator (6) and an armature shaft (10) which is rotatable about an axis (16) and, on the gear side, has a drive section (12), which includes a pinion (14) and interacts with a gear component, and a core section (8), on which at least the laminated core (4) is arranged, wherein the drive section (12) and the core section (8) of the armature shaft (10) are formed from separate components which are connected to each other non-detachably and for conjoint rotation, **characterized in that** a connecting sleeve (26) is additionally provided which secures the drive section (12) and the core section (8) on each other and/or forms a guide for the drive section (12) and the core section (8), and wherein the drive section (12) and the core section (9) are connected to each other by an interlocking connection and the end face of the core section (8) has, at the end thereof which faces the drive section (12), a recess (24) in which a pin (22) extending in the axial direction at that end of the drive section (12) which faces away from the pinion (14) engages, wherein the recess (24) and the pin (22) have a polygonal cross section.

2. Armature (2) according to Claim 1, **characterized in that** the drive section (12) and the core section (8) are additionally connected to each other in a non-detachable manner and for conjoint rotation by means of a frictionally locking connection and/or in addition by means of an adhesive connection.

3. Armature (2) according to Claim 1 or 2, **characterized in that** the recess (24) is in the form of a blind hole.

4. Armature (2) according to one or more of the preceding claims, **characterized in that** a gap extending in the axial direction is formed between the recess (24) on the core section (8) and the pin of the drive section (12), said gap comprising a width of 0.03 mm to 0.25 mm, preferably 0.05 mm to 0.2 mm, furthermore preferably 0.08 to 0.15 mm, furthermore preferably 0.1 mm, in the radial direction.

5. Armature (2) according to Claim 1, **characterized in that** said armature has a ball bearing (18) which rotatably supports the armature shaft (10) and forms the connecting sleeve (26).

6. Armature (2) according to one or more of the preceding claims, **characterized in that** the commutator (6) and a fan wheel (20) are additionally arranged on the core section (8) of the armature shaft (10).

7. Armature (2) according to Claim 6, **characterized in that** the fan wheel (20) is arranged with respect to the laminated core (4) on that side of the core section (8) which faces the drive section (12), and the commutator (6) is arranged with respect to the laminated core (4) on that side of the core section (8) which faces away from the drive section (12).

8. Armature (2) according to one or more of the preceding claims, **characterized in that** the core section (8) of the armature shaft (10) has, at least in regions, a plastics layer (28), onto which the laminated core (4) is pressed.

9. Electric hand tool appliance with an armature (2), **characterized in that** said armature is designed according to one of Claims 1 to 8.

## Revendications

1. Induit (2) pour un outil électrique manuel électroportatif avec une armature en tôle (4), un commutateur (6) et un arbre d'induit (10) rotatif autour d'un axe (16), qui est du côté de l'entraînement comprenant un pignon (14) et avec une section d'entraînement (12) et une section d'armature (8), auquel au moins l'armature en tôle (4) est adaptée, dans lequel la section d'entraînement (12) et la section d'armature (8) de l'arbre d'induit (10) sont constitués de pièces de construction séparées qui sont inamovibles et fixes en rotation entre eux,
**caractérisé en ce que**,
en outre une douille de liaison (26) est prévue, qui fixe ensemble la section d'entraînement (12) et la section d'armature (8) et/ou un guidage pour former la section d'entraînement (12) et la section d'armature (8), et dans lequel la section d'entraînement (12) et la section d'armature (8) sont liées ensemble par une liaison de forme, et la section d'armature (8) comporte frontalement du côté de son extrémité orientée du côté de la section d'entraînement (12) un évidement (24), dans lequel un bouchon (22) est engagé selon la direction axiale dans le pignon (14) selon la direction opposée à l'extrémité de la section d'entraînement (12), dans lequel l'évidement (24) et le bouchon (22) présentent une section transversale polygonale.

2. Induit (2) selon la revendication 1, **caractérisé en ce que** la section d'entraînement (12) et la section d'armature (8) sont en outre liées ensemble par une liaison ajustée en friction et/ou en outre par une liaison adhésive insoluble et fixée en rotation.

3. Induit (2) selon la revendication 1 ou 2, **caractérisé en ce que** l'évidement (24) est en forme d'ouverture de sac.

4. Induit (2) selon une ou plusieurs des revendications précédentes, **caractérisé en ce que**, entre l'évidement (24) sur la section d'armature (8) et le bouchon de la section d'entraînement (12), est réservée une fente ayant une largeur en direction axiale de 0,03 mm jusqu'à 0,25 mm, avantageusement de 0,05 mm à 0,2 mm, et préférablement de 0,08 à 0,15 mm, avec une préférence pour 0,1 mm.

5. Induit (2) selon la revendication 1, **caractérisé en ce qu'**il comporte sur l'arbre d'induit (10), un roulement à billes rotatif (18) qui constitue la douille de liaison (26).

6. Induit (2) selon une ou plusieurs des revendications précédentes, **caractérisé en ce que**, en outre le commutateur (6) et une roue de ventilateur (20) sont disposés sur la section d'armature (8) de l'arbre d'induit (10).

7. Induit (2) selon la revendication 6, **caractérisé en ce que** la roue de ventilateur (20) est disposée par rapport à l'armature en tôle (4) du côté de la section d'armature (8) faisant face à la section d'entraînement (12), et **en ce que** le commutateur (6) est disposé par rapport à l'armature en tôle (4) sur la section d'entraînement (12) du côté opposé à la section d'armature (8).)

8. Induit (2) selon une ou plusieurs des revendications précédentes, **caractérisé en ce que**, la section d'armature (8) de l'arbre d'induit (10) comporte au moins fonctionnellement une couche de matière synthétique (28) sur laquelle est pressée l'armature en tôle (4).

9. Outil électrique manuel électroportatif avec un induit (2), **caractérisé en ce qu'**il est réalisé selon l'une des revendications 1 à 8.
